# EUROPEAN PATENT SPECIFICATION

(11) **EP 2 852 019 B1**
(45) Date of publication and mention of the grant of the patent: **15.07.2020**
(21) Application number: 13275227.0
(22) Date of filing: 23.09.2013
(51) Int. Cl.: H02J 3/36

(54) **Improvements in or relating to power modules for use in power transmission networks**
Verbesserungen an oder im Zusammenhang mit Leistungsmodulen zur Verwendung in Energieübertragungsnetzen
Améliorations apportées ou relatives aux modules de puissance destinés à être utilisés dans des réseaux de transmission de puissance

(43) Date of publication of application: 25.03.2015
(73) Proprietor: General Electric Technology GmbH, 5400 Baden (CH)
(72) Inventor:
(74) Representative: Freigutpartners IP Law Firm

(56) References cited:
- WO-A1-2009/149743
- WO-A1-2010/102666
- WO-A1-2011/160678
- CN-A- 102 427 270
- US-A1- 2005 083 716
- US-A1- 2012 243 282

## Description

This invention relates to a configurable power module for use in a power transmission network, and more particularly within a high voltage direct current (HVDC) power transmission network, and to a voltage source converter comprising a plurality of such modules, as well as a method of configuring such a module and a method of operating a voltage source converter including such modules.

CN 102427270 discloses a voltage source converter which includes a conventional power module. The conventional power module includes a first sub-module which is defined by a first pair of series-connected switching elements that are separated by a first connection terminal and which are connected in parallel with a first energy storage device. The conventional power module also includes a second sub-module which has a second pair of series-connected switching elements that are separated by a second connection terminal and which are connected in parallel with a second energy storage device. The first and second sub-modules are simply connected directly to one another and so only one mode of connection is possible between the said sub-modules

US 2012/243282 describes a submodule of a high-voltage inverter has a first sub-unit with a first energy storage device, a first series circuit of two power semiconductor switching units connected in parallel with the first energy storage device, each including a switchable power semiconductor, having the same pass-through direction, and each being conductive opposite the nominal pass-through direction. A first connection terminal is connected to the potential point between the power semiconductor switching units of the first series circuit. A second sub-unit has a second energy storage device, a second series circuit of two power semiconductor switching units connected in parallel with the second energy storage device, each including a switchable power semiconductor, having the same pass-through direction, and each being conductive opposite the nominal pass-through direction. A second connection terminal is connected to the potential point between the power semiconductor switching units of the second series circuit, limiting short circuit currents quickly, reliably, and effectively in case of a fault. The first and second sub-units are connected to each other by connections designed such that a current flow between the first connection terminal and the second connection terminal in both directions takes place only via the first energy storage device and/or the second energy storage device in a selected switching state of all power semiconductor switching units.

US 2005/083716 describes a direct converter including a serial connection of any number of identical two-terminal networks, each having at least one switching state, in which their terminal voltage takes on positive values independent of the magnitude and polarity of the terminal current and at least one switching state, in which their terminal voltage takes on negative values independent of the magnitude and polarity of the terminal current.

According to a first aspect of the invention there is provided a configurable power module, as claimed in claim 1.

The inclusion of a connection module which is operable to interconnect first and second sub-modules in a first connection mode in which a parallel connection is established between the first and second energy storage devices helps to reduce conduction losses within the configurable power module as a whole because current flow can be shared within the parallel connection during, e.g. normal operation of the configurable power module.

In the meantime, the inclusion of a connection module which is additionally operable to interconnect the first and second sub-modules in a second connection mode in which the energy storage devices are able to combine and generate a blocking voltage to oppose the flow of current through the configurable power module provides the configurable power module with further useful functionality which, for example, facilitates a reduction in the number of components required within a given limb portion of a voltage source converter.

The inclusion of first and second limbs readily facilitates a parallel connection between the first and second sub-modules, while the inclusion of a bi-directional current flow control element in each limb provides a desired degree of control over the manner in which current flows through the connection module and in turn the first and second energy storage devices, such that current blocking in at least one first direction is possible.

Providing the first connection module portion with a first unidirectional current flow control element increases the current flow path options through the connection module and facilitates current blocking in a second direction.

Optionally the connection module in the first connection mode establishes a parallel connection between the first and second energy storage devices which allows current to flow into and out of each of the first and second energy storage devices in first and second opposite directions.

The ability to allow current to flow into and out of each of the first and second energy storage devices in first and second directions permits the configurable power module to selectively provide a positive voltage source or a negative voltage source (as well as zero voltage) which can be used, for example, respectively to increase or decrease an output voltage at an alternating current (AC) terminal of a voltage source converter. This in turn renders the configurable power module of the invention particularly suitable for use in step-wise waveform generation to approximate sinusoidal voltage waveforms.

Preferably each of the switching elements in each of the first and second sub-modules is a bi-directional current flow control element which selectively blocks current flow therethrough in one direction while always permitting current to flow in an opposite direction therethrough.

Such an arrangement provides the configurable power module with a maximum degree of functionality which, for example, allows the transfer of real power in both directions between AC and DC networks.

Optionally one of the switching elements in each of the first and second sub-modules is a bi-directional current flow control element which selectively blocks current flow therethrough in one direction while always permitting current to flow in an opposite direction therethrough, and the other of the switching elements in each of the first and second sub-modules is a unidirectional current flow control element which permits current flow therethrough in only one direction.

Such an arrangement continues to permit the configurable power module to selectively provide a positive voltage source or a negative voltage source (as well as zero voltage) along with the associated benefits thereof, and to transfer real power in one direction between AC and DC networks, while simplifying the power module to reduce its size, weight and cost.

The connection module may include a plurality of first connection module portions, and adjacent pairs of the first connection module portions may be separated by a further energy storage device connected in parallel between the first and second limbs.

The inclusion of further parallel-connected energy storage devices allows the configurable power module to, if desired, generate a larger blocking voltage so as to adequately oppose a larger current.

In a preferred embodiment of the invention the connection module additionally includes a second connection module portion including a second pair of bi-directional current flow control elements one of which lies within the first limb and the other of which lies within the second limb, each of the second pair of bi-directional current flow control elements selectively blocking current flow through the corresponding limb in the same second direction opposite the first direction in which each of the first pair of bi-directional current flow control elements of the first connection module portion selectively blocks current flow, the second module portion further including a second unidirectional current flow control element which interconnects the first and second limbs to establish a second series connection between the first and second energy storage devices and permits current to flow through the connection module in the second direction when each of the second pair of bi-directional current flow control elements is blocking current flow in the second direction, the second connection module portion lying next to the first connection portion to define a bi-directional module portion.

The inclusion of such a second connection module portion allows the configurable power module of the invention to make use of a greater possible blocking voltage, e.g. as provided for by the inclusion in the power module of a larger number of energy storage devices, to oppose a current flowing in each of first and second directions.

Optionally the connection module includes a plurality of first and second connection module portions lying next to one another to define respective bi-directional module portions, adjacent pairs of bi-directional module portions being separated by a further energy storage device connected in parallel between the first and second limbs.

Such an arrangement helps to maximise the available blocking voltage in both first and second directions.

Preferably the configurable power module further includes a control unit arranged in operative communication with each of the first and second sub-modules and the connection module, the control unit in use configuring the configurable power module to operate in a normal mode and in a blocking mode,
the control unit when configuring the configurable power module to operate in the normal mode operating the connection module in the first connection mode in which the parallel-connected energy storage devices combine with one another to form a larger combined energy store, and the control unit further switching on and off respective switching elements in the first and second sub-modules to selectively direct current through the combined energy store in the first and second opposite directions such that the configurable power module is able to provide both a positive voltage source and a negative voltage source commensurate in size with the larger size of the combined energy store, and
the control unit when configuring the configurable power module to operate in the blocking mode switching off respective switching elements in the first and second sub-modules and operating the connection module in the second connection mode.

The inclusion of such a control unit provides the configurable power module with a degree of desired functionality useful in voltage source converters.

In another preferred embodiment of the invention the control unit when operating the connection module in the second connection mode causes the connection module to interconnect the first and second energy storage devices in series with one another.

Such operation of the connection module ensures that the configurable power module is able to generate, in at least one direction, an increased maximum blocking voltage which is greater than the blocking voltage available from each of the first and second energy storage devices individually.

According to a second aspect of the invention there is provided a voltage source converter comprising at least one converter limb which includes first and second limb portions each of which includes a plurality of series-connected configurable power modules as described herein above.

Such a voltage source converter is able to utilise the reduced conduction losses within each configurable power module and the particular suitability of each for use in step-wise waveform generation to approximate sinusoidal voltage waveforms, while at the same time being operable in a manner which allows for a reduction in the number of components required within each limb portion of the voltage source converter. Optionally the control unit is configured to selectively configure each of the configurable power modules in one limb portion to operate in the normal mode while configuring each of the configurable power modules in the other limb portion to operate in the blocking mode.

The inclusion of such a control unit provides for operation of the voltage source converter in a manner that allows for a reduction in the number of components required within each limb portion of the voltage source converter.

According to a third aspect of the invention there is provided a method of configuring a configurable power module as claimed in claim 12.

Such a method provides the configurable power module with a degree of desired functionality useful in voltage source converters.

Preferably operating the connection module in the second connection mode includes causing the connection module to interconnect the first and second energy storage devices in series with one another.

Such a step ensures that the configurable power module is able to generate, in at least one direction, an increased maximum blocking voltage which is greater than the blocking voltage available from each of the first and second energy storage devices individually.

According to a fourth aspect of the invention there is provided a method of operating a voltage source converter as described hereinabove comprising the step of selectively configuring each of the configurable power modules in one limb portion to operate in the normal mode while configuring each of the configurable power modules in the other limb portion to operate in the blocking mode.

Such a method provides for operation of the voltage source converter in a manner that allows for a reduction in the number of components required within each limb portion of the voltage source converter.

There now follows a brief description of preferred embodiments of the invention, by way on non-limiting example, with reference being made to the following figures in which:
Figure 1(a) shows a schematic view of a configurable power module according to a first embodiment of the invention;
Figure 1(b) shows a further schematic view of the configurable power module shown in Figure 1(a) when configured to operate in a normal mode;
Figures 2(a) and 2(b) illustrate schematically operation of the configurable power module shown in Figure 1 in respective blocking modes;
Figure 3 shows a schematic view of a configurable power module according to a second embodiment of the invention;
Figures 4(a) and 4(b) illustrate schematically operation of the configurable power module shown in Figure 3 in respective blocking modes;
Figure 5 shows a schematic view of a configurable power module according to a third embodiment of the invention;
Figures 6(a) and 6(b) illustrate schematically operation of the configurable power module shown in Figure 5 in respective blocking modes;
Figure 7 shows a schematic view of a voltage source converter according to an embodiment of the invention incorporating a plurality of the configurable power modules shown in Figure 1(a);
Figure 8(a) to 8(c) illustrate schematically various phases during a normal mode of operation of one of the configurable power modules incorporated in the voltage source converter shown in Figure 7;
Figure 9(a) shows a schematic view of a configurable power module according to a fourth embodiment of the invention;
Figure 9(b) shows a further schematic view of the configurable power module shown in Figure 9(a) when configured to operate in a normal mode
Figures 10(a) to 10(c) illustrate schematically operation of the configurable power module shown in Figure 9(a) in respective normal modes; and
Figure 11 illustrates schematically operation of the configurable power module shown in Figure 9(a) in a blocking mode.

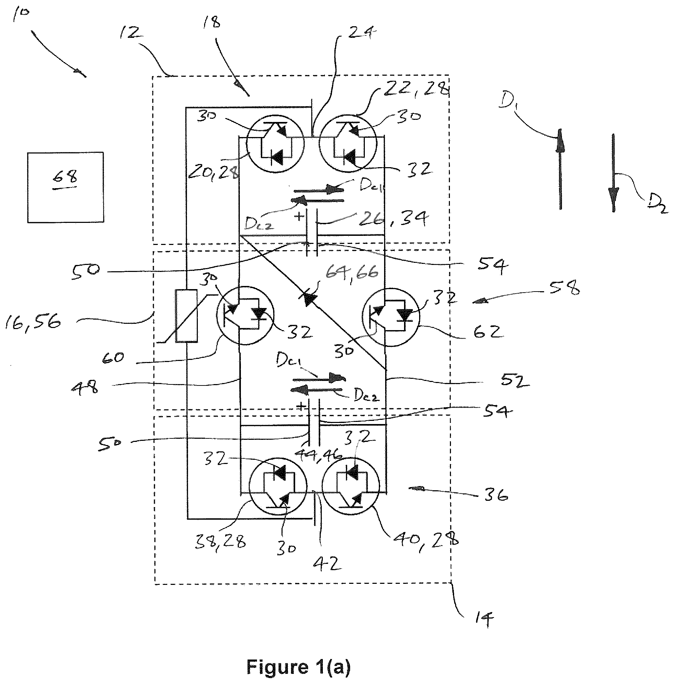

A configurable power module according to a first embodiment of the invention is designated generally by reference numeral 10, as shown in Figure 1(a).

The first configurable power module 10 includes first and second sub-modules 12, 14 which are interconnected by a connection module 16 that is operable to interconnect the first and second sub-modules 12, 14 in first and second connection modes.

The first sub-module 12 has a first pair 18 of first and second switching elements 20, 22 which are separated by a first connection terminal 24, and which are connected in parallel with a first energy storage device 26.

In the embodiment shown each of the switching elements 20, 22 is a bi-directional current flow control element 28 which selectively blocks current flow therethrough in one direction while always permitting current to flow in another, opposite direction. More particularly, each bi-directional current flow control element 28 includes a semiconductor device 30 in the form of, e.g. an Insulated Gate Bipolar Transistor (IGBT), which is connected in parallel with an anti-parallel diode 32. It is, however, possible to use another semiconductor device 30 instead of an IGBT.

In addition, in the embodiment shown the first energy storage device 26 is a first capacitor 34, although other forms of energy storage device are also possible.

The second sub-module 14 has a second pair 36 of third and fourth switching elements 38, 40 which are separated by a second connection terminal 42, and which are connected in parallel with a second energy storage device 44. Each of the third and fourth switching elements 38, 40 is a bi-directional current flow control element 28 of the type described immediately above, and the second energy storage device 44 is a second capacitor 46, although other forms of energy storage device are again also possible.

The connection module 16 includes a first limb 48 which extends between a first side 50 of each of the first and second energy storage devices 26, 44, i.e. the first and second capacitors 34, 46. The connection module 16 also includes a second limb 52 which extends between a second side 54 of each of the first and second capacitors 34, 46. In the embodiment shown each of the first and second capacitors 34, 46 is arranged so that its respective first side 50 is the positive side thereof.

In addition the connection module 16 includes a first connection module portion 56 which includes a first pair 58 of first and second further bi-directional current flow control elements 60, 62. The first further bi-directional current flow control element 60 lies within the first limb 48 while the second lies within the second limb 52.

Each of the further bi-directional current flow control elements 60, 62 is similar to the bi-directional current flow control elements 28 which form the first, second, third and fourth switching elements 20, 22, 38, 40 described above, and to that end each further bi-directional current flow control element 60, 62 selectively blocks current flow through its given limb 48, 52 in one direction while always permitting current to flow through the same limb 48, 52 in another, opposite direction. More particularly each of the further bi-directional current flow control elements 60, 62 is arranged so that they both selectively block current flow through the corresponding limb 48, 52 in the same first direction D₁, while always allowing current flow through the given limb 48, 52 in the same second direction D₂ which is opposite the first direction D₁. Other types of further bi-directional current flow control elements 60, 62 are also possible.

The first connection module portion 56 also includes a first unidirectional current flow control element 64 which permits current flow therethrough in only one direction. In the embodiment shown the first unidirectional current flow control element 64 is a first diode 66.

The first diode 66 interconnects the first and second limbs 48, 52 and, more particularly, establishes a current flow path from the second side 54 of the second capacitor 46 to the first side 50 of the first capacitor 34 so as to selectively establish a first series connection between the first and second capacitors 34, 46 which permits current to flow through the connection module 16 in the first direction D₁ when each of the first pair 58 of further bi-directional current flow control elements 60, 62 is otherwise blocking current flow in the first direction D₁.

The first configurable power module 10 also includes a control unit 68 which is arranged in operative communication with each of the first and second sub-modules 12, 14 and the connection module 16.

In use the control unit 68 configures the first configurable power module 10 to operate in a normal mode and in a blocking mode.

When configuring the first configurable power module 10 to operate in the normal mode the control unit 68 operates the connection module 16 in the first connection mode which establishes a parallel connection between the first and second capacitors 34, 46 by switching on each of the first and second further bi-directional current flow control elements 60, 62. The parallel connection has bidirectional current flow characteristics which, in the embodiment shown, allows current to flow into and out of the first and second capacitors 34, 46, i.e. through the first and second capacitors 34, 46, in first and second directions D_{C1}, D_{C2}.

In other arrangements the parallel connection may have controlled bidirectional current flow characteristics which allow current to flow within the parallel connection in first and second opposite directions.

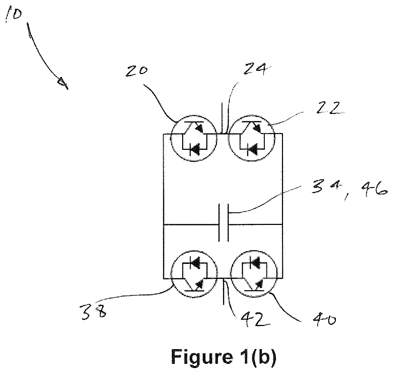

In the foregoing manner the control unit 68 arranges the first configurable power module 10 in a full-bridge arrangement (as shown in Figure 1(b)) in which the first and second capacitors 34, 46 combine with one another to form a larger effective capacitance (equal to the sum of the capacitance of the first and second capacitors 34, 46).

Thereafter the control unit 68 switches on and off each of the first, second, third and fourth switching elements 20, 22, 38, 40 to selectively direct current through the combined capacitors 34, 36 in the first and second directions D_{C1}, D_{C2} so that the first configurable power module 10 selectively provides each of a positive voltage source and a negative voltage source commensurate in size with the larger size of the combined capacitors 34, 36.

The control unit 68 also controls switching of the first, second, third and fourth switching elements 20, 22, 38, 40 to selectively bypass the first and second capacitors 34, 46 and thereby cause the first configurable power module 10 to provide a zero voltage source while accommodating current flow through the configurable power module 10 in each of the first and second directions D₁, D₂.

When configuring the first configurable power module 10 to operate in the blocking mode the control unit 68 switches off all of the first, second, third and fourth switching elements 20, 22, 38, 40 in the first and second pairs 18, 36 of switching elements, and operates the connection module 16 in its second connection mode.

When operating the connection module 16 in its second connection mode the control unit 68 also switches off both of the first and second further bi-directional current flow control elements 60, 62.

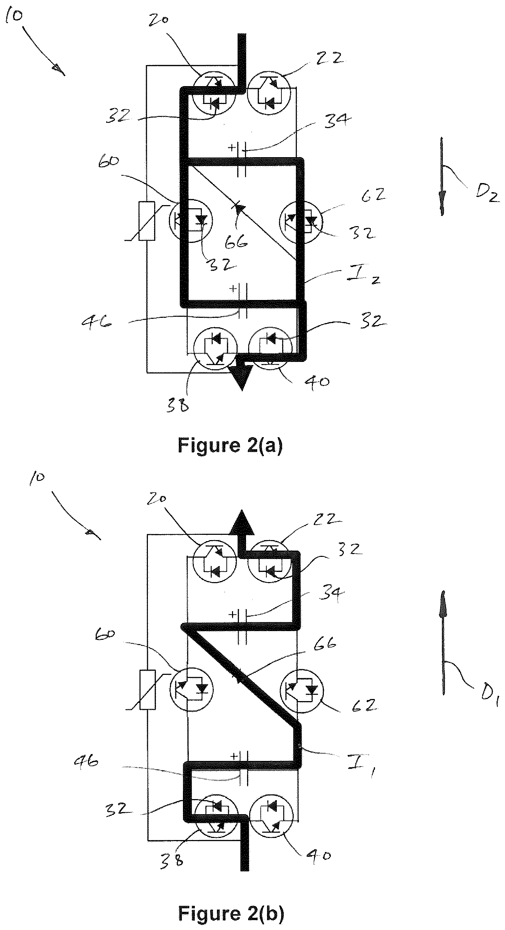

In such a connection mode the anti-parallel diode 32 in each of the first and fourth switching elements 20, 40 and in the first and second further bi-directional current flow control elements 60, 62 can act to interconnect the first and second capacitors 34, 46 in parallel with one another and thereby permit them to combine and generate a blocking voltage to oppose the flow of current I₂ through the first configurable power module 10 in the second direction D₂, as shown in Figure 2(a).

The first and second capacitors 34, 46 are connected in parallel and so the voltage across each one must be essentially the same. As a result the blocking voltage they are able to generate is commensurate only with the size of a single one of the first and second capacitors 34, 46.

In addition, in such a connection mode the anti-parallel diode 32 in each of the second and third switching elements 22, 38 together with the first unidirectional current flow control element 64, i.e. the first diode 66, can act to interconnect the first and second capacitors 34, 46 in series with one another in a first series arrangement. This again permits the first and second capacitors 34, 46 to combine and generate a blocking voltage to oppose the flow of current I₁ flowing through the first configurable power module 10 in the first direction D₁, as shown in Figure 2(b).

However, because the first and second capacitors 34, 46 are connected in series in the second instance the voltage across each one combines to provide a larger blocking voltage commensurate with a sum of the size of the first and second capacitors 34, 46, i.e. double in size.

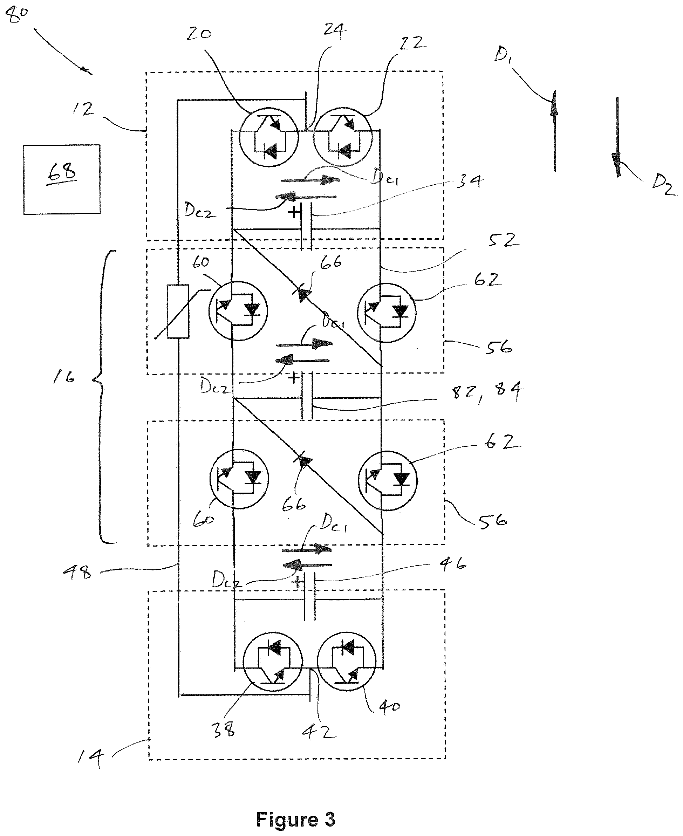

A configurable power module 80 according to a second embodiment of the invention is illustrated schematically in Figure 3. The second configurable power module 80 is similar to the first configurable power module 10 and like features share the same reference numerals.

However the second configurable power module 80 instead includes two first connection module portions 56 which are separated by a further energy storage device 82, in the form of a further capacitor 84, which is connected in parallel between the first and second limbs 48, 52.

Still further embodiments of the invention may include more than two first connection module portions 56 together with a similarly greater number of associated further energy storage devices 82, e.g. further capacitors 84.

In use the control unit 68 configures the second configurable power module 80 to operate in normal and blocking modes which are very similar to those of the first configurable power module 10.

When configuring the second configurable power module 80 to operate in the normal mode the control unit 68 again operates the connection module 16 in a first connection mode to establish a parallel connection between the first, second and further capacitors 34, 46, 84 which allows current to flow through each of the first, second and further capacitors 34, 46, 84 in the first and second directions D_{C1}, D_{C2} by switching on each of the first and second further bi-directional current flow control elements 60, 62 in each of the first connection module portions 56.

In this manner the control unit 68 again arranges the second configurable power module 80 in a full-bridge arrangement but one in which the first, second and further capacitors 34, 46, 84 combine with one another to form a larger effective capacitance (equal to the sum of the capacitance of the first, second and further capacitors 34, 46, 84).

Thereafter the control unit 68 switches on and off each of the first, second, third and fourth switching elements 20, 22, 38, 40 to selectively direct current through the combined capacitors 34, 46, 84 in the first and second directions D_{C1}, D_{C2} such that the second configurable power module 80 selectively provides a positive voltage source and a negative voltage source commensurate in size with the larger size of the combined capacitors 34, 46, 84, i.e. triple in size.

When configuring the second configurable power module 80 to operate in the blocking mode the control unit 68 switches off all of the first, second, third and fourth switching elements 20, 22, 38, 40 in the first and second pairs 18, 36 of switching elements, and operates the connection module 16 in a second connection mode.

When operating the connection module 16 in its second connection mode the control unit 68 again switches off both of the first and second further bi-directional current flow control elements 60, 62, in each of the first connection module portions 56.

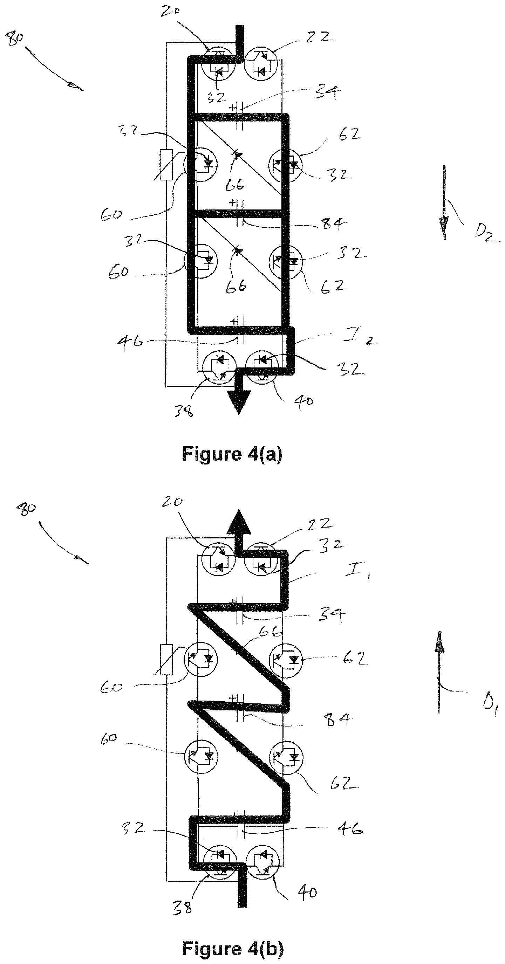

The anti-parallel diode 32 in each of the first and fourth switching elements 20, 40 and in the first and second further bi-directional current flow control elements 60, 62 of each of the first connection module portions 56 are able to act to interconnect the first, second and further capacitors 34, 46, 84 in parallel with one another and thereby permit them to combine and generate a blocking voltage to oppose the flow of current I₂ through the second configurable power module 80 in the second direction D₂, i.e. as shown in Figure 4(a).

The first, second and further capacitors 34, 46, 84 are again connected in parallel and so the voltage across each one must be essentially the same. As a result the blocking voltage they are able to generate is commensurate only with the size of a single one of the first, second and further capacitors 34, 46, 84.

Alternatively the anti-parallel diode 32 in each of the second and third switching elements 22, 38 together with the first unidirectional current flow control element 64, i.e. the first diode 66, in each first connection module portion 56 can act to interconnect the first, second and further capacitors 34, 46, 84 in series with one another. This again permits the first, second and further capacitors 34, 46, 84 to combine and generate a blocking voltage to oppose the flow of current I₁ through the second configurable power module 80 in the first direction D₁, i.e. as shown in Figure 4(b).

However the first, second and further capacitors 34, 46, 84 are connected in series and so the voltage across each one combines to provide a larger blocking voltage commensurate with a sum of the size of the first, second and further capacitors 34, 46, 84, i.e. triple in size.

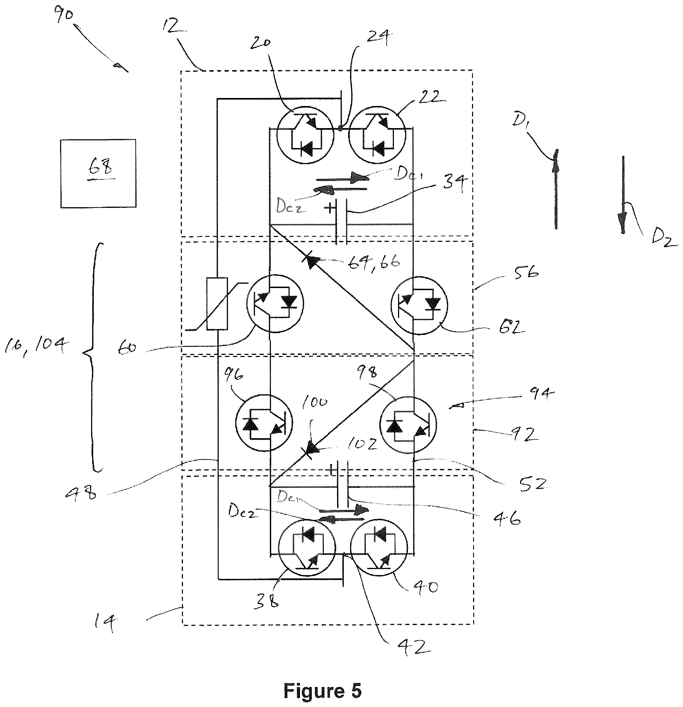

Figure 5 illustrates schematically a configurable power module 90 according to a third embodiment of the invention.

The third configurable power module 90 is similar to the first configurable power module 10 and like features share the same reference numerals.

The third configurable power module 90 differs from the first configurable power module 10 in that it includes a connection module 16 which additionally includes a second connection module portion 92.

The second connection module portion 92 has a second pair 94 of third and fourth further bi-directional current flow control elements 96, 98. The third further bi-directional current flow control element 96 lies within the first limb 48 and the fourth further bi-directional current flow control element 98 lies within the second limb 52. The third and fourth further bi-directional current flow control elements 96, 98 are arranged in the opposite sense to each of the first and second further bi-directional current flow control elements, 60, 62 in that they both selectively block current flow through the corresponding limb 48, 52 in the second direction D₂, i.e. opposite the first direction D₁ in which each of the first and second further bi-directional current flow control elements 60, 62 selectively blocks current.

The second connection module portion 92 also includes a second unidirectional current flow control element 100 in the form of a second diode 102.

The second diode 102 again interconnects the first and second limbs 48, 52 but instead establishes a current flow path from the second side 54 of the first capacitor 34 to the first side 50 of the second capacitor 46 so as to selectively establish a second series connection between the first and second capacitors 34, 46 which permits current to flow through the connection module 16 in the second direction D₂ when each of the first and second pairs 58, 94 of further bi-directional current flow control elements 60, 62, 96, 98 is otherwise blocking current flow in the second direction D₂.

The second connection module portion 92 lies immediately next to the first connection module portion 56 and in this manner the two connection module portions 56, 92 together define a bi-directional module portion 104.

Further embodiments of the invention may include a connection module 16 which has a plurality of such bi-directional module portions 104, adjacent pairs of which are separated by a still further energy storage device, e.g. a still further capacitor, connected in parallel between the first and second limbs 48, 52.

In use the control unit 68 configures the third configurable power module 90 to again operate in normal and blocking modes which are similar to those of the first configurable power module 10.

When configuring the third configurable power module 90 to operate in the normal mode the connection module 16 is operated in the first connection mode, i.e. to establish a parallel connection between the first and second capacitors 34, 46, by additionally switching on each of the third and fourth further bi-directional current flow control elements 96, 98 in the second pair 94 of switching elements in the second connection module portion 92.

Thereafter it functions in essentially the same manner as the first configurable power module 10.

When configuring the third configurable power module 90 to operate in the blocking mode the connection module 16 is operated in its second connection mode by additionally switching off both of the third and fourth further bi-directional current flow control elements 96, 98, in the second connection module portion 92.

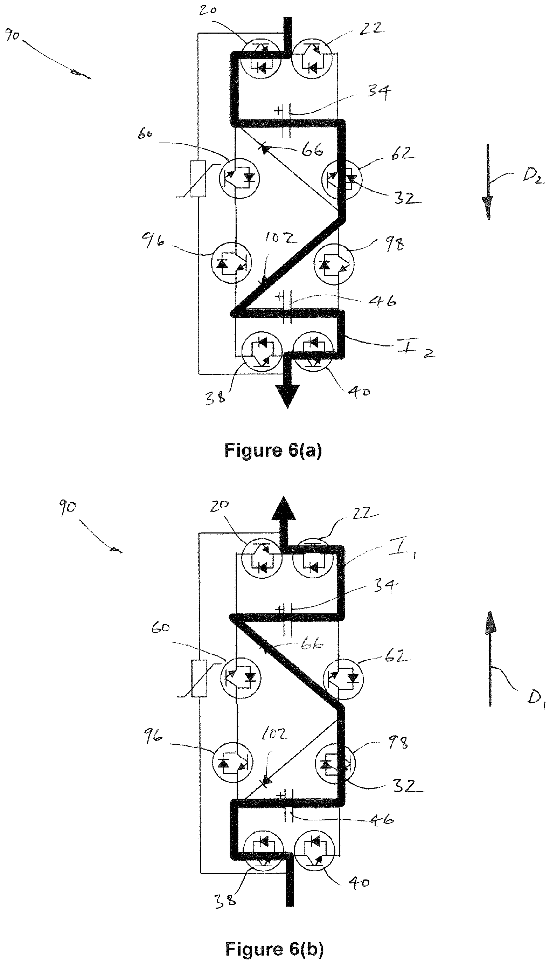

The first unidirectional current flow control element 64, i.e. the first diode 66, in the first connection module portion 56 can cooperate with the anti-parallel diode 32 in the fourth further bi-directional current flow control element 98 of the second connection module portion 92 to interconnect the first and second capacitors 34, 46 in a first series connection. This again permits the first and second capacitors 34, 46 to combine and generate a blocking voltage to oppose the flow of current I₁ through the third configurable power module 90 in the first direction D₁, i.e. as shown in Figure 6(b). Moreover, the first and second capacitors 34, 46 are again connected in series and so a larger blocking voltage commensurate with a sum of the size of the first and second capacitors 34, 46, i.e. double in size, is provided.

In addition the second unidirectional current flow control element 100, i.e. the second diode 102, in the second connection module portion 92 can cooperate with the anti-parallel diode 32 in the second further bi-directional current flow control element 62 of the first connection module portion 56 to interconnect the first and second capacitors 34, 46 in a second series connection. This permits the first and second capacitors 34, 46 to combine and generate a blocking voltage to oppose the flow of current I₂ in the second direction D₂, i.e. as shown in Figure 6(a). Moreover, because the first and second capacitors 34, 46 are connected in series, a larger blocking voltage commensurate with a sum of the size of the first and second capacitors 34, 46, i.e. double in size, can be provided.

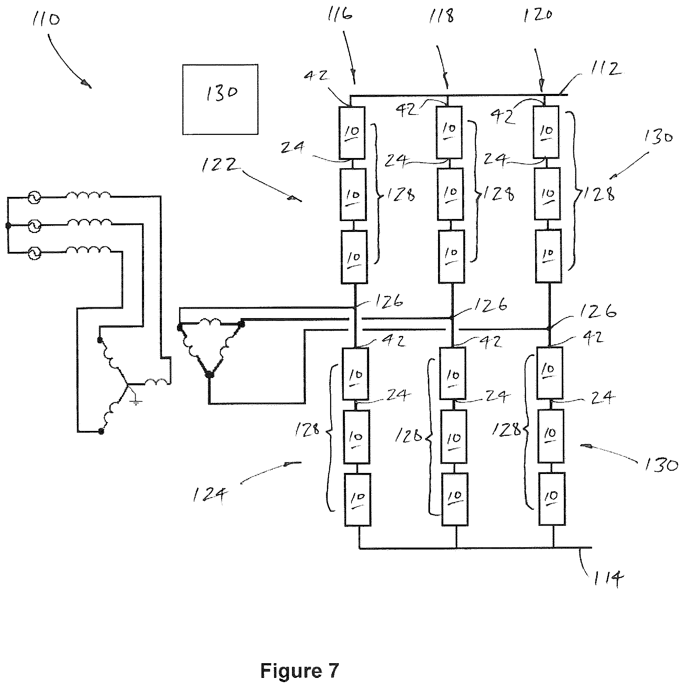

Figure 7 shows a schematic view of a voltage source converter 110 which includes first and second direct current (DC) terminals 112, 114 between which extends a first, second and third converter limb 116, 118, 120.

Each converter limb 116, 118, 120 includes first and second limb portions 122, 124 which are separated by an alternating current (AC) terminal 126.

Each limb portion 122, 124 includes a chain-link converter 128 which extends between the AC terminal 126 and a corresponding one of the first or the second DC terminal 112, 114.

Each chain-link converter 128 includes a plurality of series-connected first configurable power modules 10. Each of the first configurable power modules 10 is connected in the opposite manner to which they are illustrated in Figure 1(a) in the sense that in each first limb portion 122 the second connection terminal 42 of each first configurable power module 10 lies closest to the first DC terminal 112, and in each second limb portion 124 the first connection terminal 24 of each first configurable power module 10 lies closest to the second DC terminal 114.

The number of first configurable power modules 10 in each chain-link converter 128 is determined by the required voltage rating of the voltage source converter 110.

In addition, the plurality of series-connected first configurable power modules 10 in each limb portion 122, 124 may be replaced by a plurality of second or third configurable power modules 80; 90, or by a combination of series-connected first, second and/or third configurable power modules 10; 80; 90.

The voltage source converter 110 also includes a control unit 130 which is arranged in operative communication with each of the first configurable power modules 10.

In use the control unit 130 configures each of the first configurable power modules 10 in one limb portion 122, 124, of a given converter limb 116, 118, 120, to operate in the normal mode so as to generate a voltage waveform at the corresponding AC terminal 126 while configuring each of the first configurable power modules 10 in the other limb portion 122, 124 of the corresponding converter limb 116, 118, 120 to operate in the blocking mode so as to effectively switch the other limb portion 122, 124 out of circuit between the respective DC terminal 112, 114 and the AC terminal 126.

During normal operating conditions the control unit 130 operates the voltage source converter 110 such that the positive or negative voltage source provided by the first configurable power modules 10 which are operating in the normal mode within a given limb portion 122, 124 is controlled to drive the current to zero within the corresponding converter limb 116, 118, 120 when each of the first configurable power modules 10 in the said converter limb 116, 118, 120 is switched between the normal and blocking modes.

Such a zero current switching operation, i.e. such a "soft" switching operation, minimises switching losses and reduces voltage sharing errors caused by differences in individual semiconductor device 30 (i.e. IGBT) turn-off times within each first configurable power module 10 when each converter limb portion 122, 124 in a given converter limb 116, 118, 120 is switched between the normal and blocking modes. This is because the current charging any stray capacitance across each switching element 20, 22, 38, 40, 60, 62 is small at the commutation instant.

In contrast, under disturbed or fault operating conditions some or all of the first configurable power modules 10 may be discharged such that they are unable to deliver a sufficient voltage source to drive the current to zero at the commutation instant. In such circumstances occasional so-called "hard" switching of the first configurable power modules 10 from a level of high current throughput may be required.

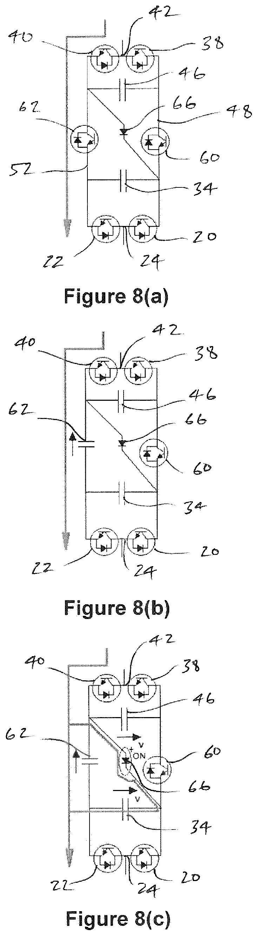

Such circumstances typically arise during transient operation of the voltage source converter 110 as a static synchronous compensator (STATCOM) to transfer reactive power only. This is because in this condition, the AC current is 90 degrees out of phase with the AC voltage and thus the current is at a peak value, as shown in Figure 8(a), when the AC voltage crosses zero and the first configurable power modules 10 are required to commutate the current from one limb portion 122, 124 to the other.

Each first configurable power module 10 inherently protects each of the switching elements 20, 22, 38, 40, 60, 62 i.e. each of the associated semiconductor devices 30, against over-voltage damage during temporary hard switching. This is because during turn-off of the semiconductor device 30, as shown in Figure 8(b), the semiconductor device 30 is clamped by the first unidirectional current flow controller 64, i.e. the first diode 66, to the first and second capacitors 34, 46, as shown in Figure 8(c).

As a result any over-voltage damage that may have been created by voltage sharing errors is avoided without the need for large passive snubber circuits (capacitor, resistor, diode combinations), or the use of active transistor gate drive schemes which temporarily hold the switching elements 20, 22, 38, 40, 60, 62 in their linear region (i.e. not fully turned-on or turned-off) whilst voltages are allowed to equalise. This is advantageous since both snubber circuits and active transistor gate drive schemes are undesirable from a component count, energy loss and reliability point of view.

In addition to the foregoing the ability to operate each first configurable power module 10 in the blocking mode, i.e. to switch each first configurable power module 10 into the blocking mode arrangement shown in each of Figures 2(a) and 2(b), permits start up of the voltage source converter 110 of the invention by drawing energy from either one of an associated AC network or a DC network. In this regard, ordinarily before the voltage source converter 110 can be operated to transfer power between the AC and DC networks it must be provided with energy to charge the first and second capacitors 34, 46 in each first configurable power module 10 and to provide energy to switch each of the first, second, third, fourth, first further, and second further switching elements 20, 22, 38, 40, 60, 62.

More particularly, each first configurable power module 10 permits start up from the AC network as follows. It allows (in each converter limb 116, 118, 120) current to flow from the AC terminal 126 to the first DC terminal 112 by passing through each first configurable power module 10 in the first limb portion 122 in the second direction D₂, i.e. as shown in Figure 2(a), and it allows the same current to flow from the second DC terminal 114 back to the AC terminal 126 by passing through each first configurable power module 10 in the second limb portion 124 again in the second direction D₂.

Each first configurable power module 10 additionally permits start up from the DC network by allowing (in each converter limb 116, 118, 120) current to flow from the first DC terminal 112 to the AC terminal 126 by passing through each first configurable power module 10 in the first limb portion 122 in the first direction D₁, i.e. as shown in Figure 2(b), and allowing the same current to flow from the AC terminal 126 to the second DC terminal 114 (and back to the first DC terminal 112 via the DC network) by passing through each first configurable power module 10 in the second limb portion 124 again in the first direction D₁.

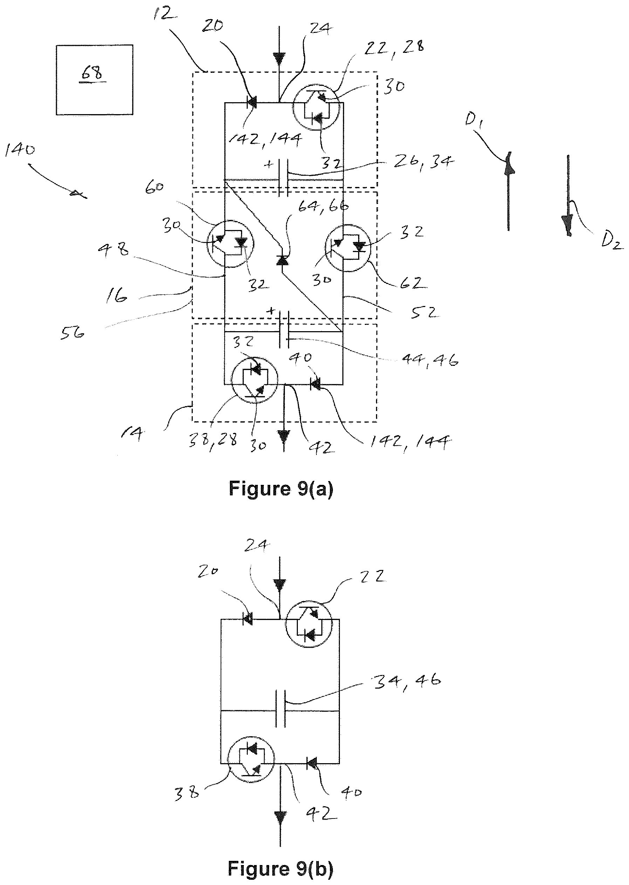

A configurable power module according to a fourth embodiment of the invention is designated generally by reference numeral 140, and is shown schematically in Figure 9(a).

The fourth configurable power module 140 is similar to the first configurable power module 10 and like features share the same reference numerals.

The fourth configurable power module 140 differs from the first configurable power module 10 in that the first bidirectional current flow control element 28 of each of the first and fourth switching elements 20, 40 is replaced by a third unidirectional current flow control element 142, i.e. a third diode 144.

The fourth configurable power module 140 may, alternatively, include a connection module 16 of the type described in connection with one or other of the second and third configurable power modules 80; 90.

The fourth configurable power module 140 also includes a control unit 68 which is arranged in operative communication with each of the first and second sub-modules 12, 14 and the connection module 16.

In use the control unit 68 similarly selectively configures the fourth configurable power module 140 to operate in one of a normal mode and a blocking mode.

When configuring the fourth configurable power module 140 to operate in the normal mode the control unit 68 operates the connection module 16 in the first connection mode and, more particularly, establishes a parallel connection between the first and second capacitors 34, 46 which allows current to flow through each of the first and second capacitors 34, 46 in the first and second directions D_{C1}, D_{C2} by switching on each of the first and second further bi-directional current flow control elements 60, 62.

In this manner the control unit 68 arranges the fourth configurable power module 140 in a sparse full-bridge arrangement (as shown in Figure 9(b)) in which the first and second capacitors 34, 46 combine with one another to form a larger effective capacitance (equal to the sum of the capacitance of the first and second capacitors 34, 46).

Thereafter the control unit 68 switches on and off each of the second and third switching elements 22, 38 to selectively direct current through the combined capacitors 34, 36 in each of the first and second directions D_{C1}, D_{C2} so that the fourth configurable power module 140 selectively provides each of a positive voltage source and a negative voltage source commensurate in size with the larger size of the combined capacitors 34, 46.

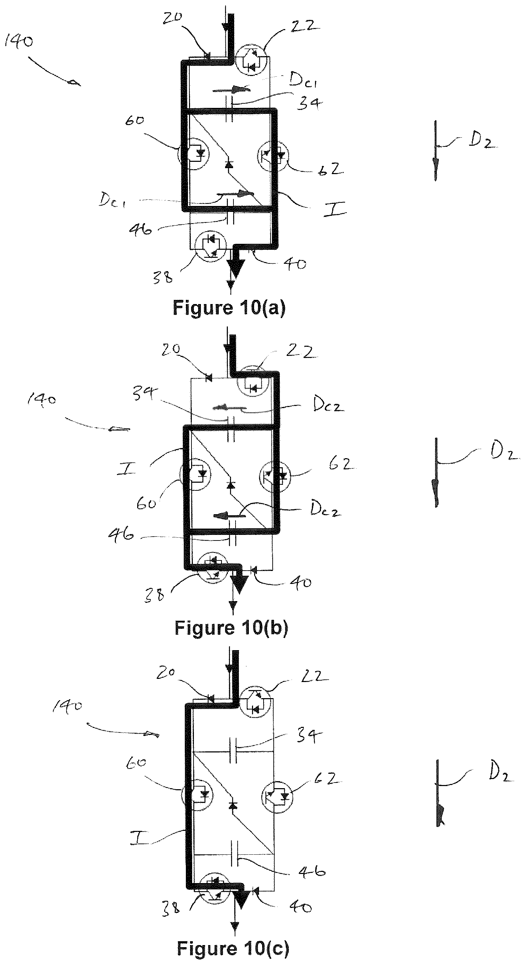

More particularly, the control unit 68 switches off both of the second and third switching elements 22, 38 to direct current I through the first and second capacitors 34, 46 in the first direction D_{C1} to generate a positive voltage source, as shown in Figure 10(a).

The control unit 68 can also switch on both of the second and third switching elements 22, 38 to direct current I through the first and second capacitors 34, 46 in the second direction D_{C2} to generate a negative voltage source, as shown in Figure 10(b).

In addition the control unit 68 can also switch on only the third switching element 38 to selectively bypass the first and second capacitors 34, 46 and thereby cause the fourth configurable power module 140 to provide a zero voltage source, as shown in Figure 10(c).

In the aforementioned switching arrangements current is able to flow through the first and second capacitors 34, 46 in the first and second directions D_{C1}, D_{C2} (and so positive and negative voltage sources can be provided), but the sparse nature of the fourth configurable power module 140 means that current can only flow through the module 140, i.e. from the first connection terminal 24 to the second connection terminal 42, in the second direction D₂ only.

When configuring the fourth configurable power module 140 to operate in the blocking mode the control unit 68 switches off the second and third switching elements 22, 38 in the first and second pairs 18, 36 of switching elements, and operates the connection module 16 in its second connection mode.

When operating the connection module 16 in its second connection mode the control unit 68 also switches off both of the first and second further bi-directional current flow control elements 60, 62.

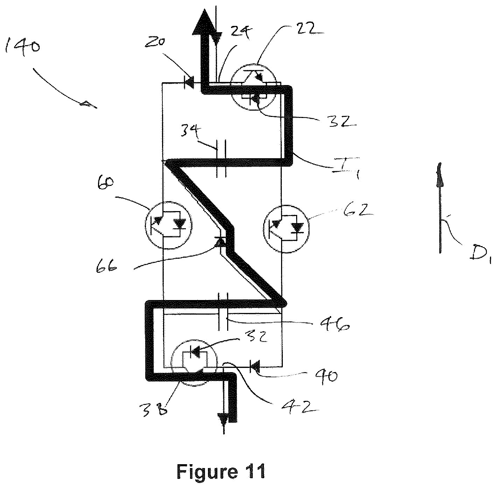

In such a connection mode the anti-parallel diode 32 in each of the second and third switching elements 22, 38 together with the first unidirectional current flow control element 64, i.e. the first diode 66, can act to interconnect the first and second capacitors 34, 46 in series with one another in a first series arrangement. This permits the first and second capacitors 34, 46 to combine and generate a blocking voltage to oppose the flow of current I₁ flowing through the fourth configurable power module 140 in the first direction D₁, as shown in Figure 11.

The first and second capacitors 34, 46 are connected in series and so the voltage across each one combines to provide a larger blocking voltage commensurate with a sum of the size of the first and second capacitors 34, 46, i.e. double in size.

Respective fourth configurable power modules 140 may be incorporated into the voltage source converter 110 shown in Figure 7 instead of each of the first configurable power modules 10, or in combination with one or more first, second or third configurable power modules 10; 80; 90. Such fourth configurable power modules 140 are again connected in the opposite manner to which they are illustrated in Figure 9(a), i.e. in each first limb portion 122 the second connection terminal 42 of each fourth configurable power module 140 lies closest to the first DC terminal 112, and in each second limb portion 124 the first connection terminal 24 of each fourth configurable power module 140 lies closest to the second DC terminal 114.

Such a voltage source converter including fourth configurable power modules 140 operates in essentially the same manner as the voltage source converter 110 shown in Figure 7 with the limitation that it is only able to transfer real power in one direction between AC and DC networks, i.e. from the AC network to the DC network, unless the polarity of the DC network voltage is reversed.

## Claims

1. A configurable power module (10; 80; 90; 140), for use in a power transmission network, comprising:
a first sub-module (12) including a first pair of series-connected switching elements (20, 22) separated by a first connection terminal (24) and connected in parallel with a first energy storage device (26); and
a second sub-module (14) including a second pair (36) of series-connected switching elements (38, 40) separated by a second connection terminal (42) and connected in parallel with a second energy storage device (44),
a connection module (16) operable to interconnect the first and second sub-modules (12, 14) in first and second connection modes,
wherein the connection module (16) includes
a first limb (48) which extends between a first side (50) of each of the first and second energy storage devices (26, 44);
a second limb (52) which extends between a second side (54) of each of the first and second energy storage devices (26, 44); and
a first connection module portion (56) which includes a first pair (58) of bi-directional current flow control elements (60, 62), one bi-directional current flow control element (60) lying within the first limb (48) and the other bi-directional current flow control element (62) lying within the second limb (52), each of the bi-directional current flow control elements (60, 62) selectively blocking current flow through the corresponding limb (48, 52) in the same first direction (D₁) and permitting current to flow through the corresponding limb (48, 52) in the same second direction (D₂) opposite the first direction (D₁),
wherein the first connection module portion (56) further includes a first unidirectional current flow control element (64) interconnected between the first side (50) of the first energy storage device (26) and the second side (54) of the second energy storage device (44), which permits current to flow therethrough in only one direction, the first unidirectional current flow control element (64) interconnecting the first and second limbs (48, 52) to selectively establish a first series connection between the first and second energy storage devices (26, 44) and permit current to flow through the connection module (16) in the first direction (D₁) when each of the first pair (58) of bi-directional current flow control elements (60, 62) is blocking current flow in the first direction (D₁),
the connection module (16) in the first connection mode arranging the configurable power module (10; 80; 90; 140) in a full-bridge arrangement in which a parallel connection between the first and second energy storage devices (26, 44) is established which has bidirectional current flow characteristics, and the connection module (16) in the second connection mode interconnecting the first and second energy storage devices (26, 44) to permit the first and second energy storage devices (26, 44) to combine and generate a blocking voltage to oppose the flow of current between the first and second connection terminals (24, 42).

2. A configurable power module (10; 80; 90; 140) according to Claim 1, wherein the connection module (16) in the first connection mode establishes a parallel connection between the first and second energy storage devices (26, 44) which allows current to flow into and out of each of the first and second energy storage devices (26, 44) in the first and second opposite directions (D₁, D₂).

3. A configurable power module (10; 80; 90; 140) according to Claim 1 or Claim 2, wherein each of the switching elements (20, 22; 38, 40) in each of the first and second sub-modules (12, 14) is a bi-directional current flow control element (28) which selectively blocks current flow therethrough in one direction while always permitting current to flow in an opposite direction therethrough.

4. A configurable power module (10; 80; 90; 140) according to Claim 1 or Claim 2, wherein one of the switching elements (20, 22; 38, 40) in each of the first and second sub-modules (12, 14) is a bi-directional current flow control element (28) which selectively blocks current flow therethrough in one direction while always permitting current to flow in an opposite direction therethrough, and the other of the switching elements (20, 22; 38, 40) in each of the first and second sub-modules (12, 14) is a unidirectional current flow control element which permits current flow therethrough in only one direction.

5. A configurable power module (80; 90) according to any preceding claim, wherein the connection module (16) includes a plurality of first connection module portions (56), and adjacent pairs of the first connection module portions (56) are separated by a further energy storage device (82) connected in parallel between the first and second limbs (48, 52).

6. A configurable power module (90) according to any preceding claim, wherein the connection module (16) additionally includes a second connection module portion (92) including a second pair (94) of bi-directional current flow control elements (96, 98) one of which lies within the first limb (48) and the other of which lies within the second limb (52), each of the second pair (94) of bi-directional current flow control elements (96, 98) selectively blocking current flow through the corresponding limb (48, 52) in the same second direction (D₂) opposite the first direction (D₁) in which each of the first pair (58) of bi-directional current flow control elements (60, 62) of the first connection module portion (56) selectively blocks current flow, the second module portion (92) further including a second unidirectional current flow control element (100) which interconnects the first and second limbs (48, 52) to establish a second series connection between the first and second energy storage devices (26, 44) and permits current to flow through the connection module (16) in the second direction (D₂) when each of the second pair of bi-directional current flow control elements (96, 98) is blocking current flow in the second direction (D₂), the second connection module portion (92) lying next to the first connection portion (56) to define a bi-directional module portion (104).

7. A configurable power module according to Claim 6, wherein the connection module (16) includes a plurality of first and second connection module portions (56, 92) lying next to one another to define respective bi-directional module portions (104), adjacent pairs of bi-directional module portions (104) being separated by a further energy storage device connected in parallel between the first and second limbs (48, 52).

8. A configurable power module (10; 80; 90; 140) according to any preceding claim, further including a control unit (68) arranged in operative communication with each of the first and second sub-modules (12, 14) and the connection module (16), the control unit (68) in use configuring the configurable power module (10; 80; 90; 140) to operate in a normal mode and in a blocking mode,
the control unit (68) when configuring the configurable power module (10; 80; 90; 140) to operate in the normal mode operating the connection module (16) in the first connection mode in which the parallel-connected energy storage devices (26, 44) combine with one another to form a larger combined energy store, and the control unit (68) further switching on and off respective switching elements (20. 22; 38, 40) in the first and second sub-modules (12, 14) to selectively direct current through the combined energy store in first and second opposite directions (D_{C1}, D_{C2}) such that the configurable power module (10; 80; 90; 140) is able to provide both a positive voltage source and a negative voltage source commensurate in size with the larger size of the combined energy store, and
the control unit (68) when configuring the configurable power module (10; 80; 90; 140) to operate in the blocking mode switching off respective switching elements (20, 22; 38, 40) in the first and second sub-modules (12, 14) and operating the connection module (16) in the second connection mode.

9. A configurable power module (10; 80; 90; 140) according to Claim 8, wherein the control unit (68) when operating the connection module (16) in the second connection mode causes the connection module (16) to interconnect the first and second energy storage devices (26, 44) in series with one another.

10. A voltage source converter (110) comprising at least one converter limb (116, 118, 120) which includes first and second limb portions (122, 124) each of which includes a plurality of series-connected configurable power modules (10; 80; 90; 140) according to Claim 8 or Claim 9.

11. A voltage source converter according to Claim 10, wherein the control unit (68) is configured to selectively configure each of the configurable power modules (10; 80; 90; 140) in one limb portion (122, 124) to operate in the normal mode while configuring each of the configurable power modules (10; 80; 90; 140) in the other limb portion (122, 124) to operate in the blocking mode.

12. A method of configuring a configurable power module (10; 80; 90; 140) according to any of Claims 1 to 9, wherein:
configuring the configurable power module (10; 80; 90; 140) to operate in a normal mode comprises the steps of:
(a) operating the connection module (16) in the first connection mode whereby the configurable power module (10; 80; 90; 140) is arranged as a full-bridge in which the parallel-connected energy storage devices (26, 44) combine with one another to form a larger combined energy store; and
(b) switching on and off respective switching elements (20, 22; 38, 40) in the first and second sub-modules (12, 14) to selectively direct current through the combined energy store in the first and second opposite directions (D_{C1}, D_{C2}) such that the configurable power module (10; 80; 90; 140) is able to provide both a positive voltage source and a negative voltage source commensurate in size with the larger size of the combined energy store; and
configuring the configurable power module (10; 80; 90; 140) to operate in a blocking mode comprises the steps of:
(c) switching off respective switching elements (20, 22; 38, 40) in the first and second sub-modules (12, 14); and
(d) operating the connection module (16) in the second connection mode.

13. A method of configuring a configurable power module (10; 80; 90; 140) according to Claim 12, wherein operating the connection module (16) in the second connection mode includes causing the connection module (16) to interconnect the first and second energy storage devices (26; 44) in series with one another.

14. A method of operating a voltage source converter (110) according to Claim 10 or Claim 11, comprising the step of selectively configuring each of the configurable power modules (10; 80; 90; 140) in one limb portion (122, 124) to operate in the normal mode while configuring each of the configurable power modules (10; 80; 90; 140) in the other limb portion (122, 124) to operate in the blocking mode.

## Patentansprüche

1. Konfigurierbares Leistungsmodul (10; 80; 90; 140) zur Verwendung in einem Energieübertragungsnetz, umfassend:
ein erstes Untermodul (12), aufweisend ein erstes Paar von in Reihe geschalteten Schaltelementen (20, 22), die durch einen ersten Verbindungsanschluss (24) getrennt und parallel mit einer ersten Energiespeichervorrichtung (26) geschaltet sind; und
ein zweites Untermodul (14), aufweisend ein zweites Paar (36) von in Reihe geschalteten Schaltelementen (38, 40), die durch einen zweiten Verbindungsanschluss (42) getrennt und parallel mit einer zweiten Energiespeichervorrichtung (44) geschaltet sind,
ein Verbindungsmodul (16), das betrieben werden kann, um das erste und das zweite Untermodul (12, 14) im ersten und zweiten Verbindungsmodus zusammenzuschalten,
wobei das Verbindungsmodul (16) einen ersten Schenkel (48) aufweist, der sich zwischen einer ersten Seite (50) jeder der ersten und zweiten Energiespeichervorrichtungen (26, 44) erstreckt;
einen zweiten Schenkel (52), der sich zwischen einer zweiten Seite (54) jeder der ersten und zweiten Energiespeichervorrichtungen (26, 44) erstreckt; und
einen ersten Verbindungsmodulabschnitt (56), der ein erstes Paar (58) von bidirektionalen Stromflusssteuerelementen (60, 62) einschließt, wobei ein bidirektionales Stromflusssteuerelement (60) innerhalb des ersten Schenkels (48) und das andere bidirektionale Stromflusssteuerelement (62) innerhalb des zweiten Schenkels (52) liegt, wobei jedes der bidirektionalen Stromflusssteuerelemente (60, 62) selektiv den Stromfluss durch den entsprechenden Schenkel (48, 52) in der gleichen ersten Richtung (D₁) blockiert und zulässt, dass Strom durch den entsprechenden Schenkel (48, 52) in der gleichen zweiten Richtung (D₂) entgegen der ersten Richtung (D₁) fließt,
wobei der erste Verbindungsmodulabschnitt (56) weiter ein erstes unidirektionales Stromflusssteuerelement (64) einschließt, das zwischen der ersten Seite (50) der ersten Energiespeichervorrichtung (26) und der zweiten Seite (54) der zweiten Energiespeichervorrichtung (44) zwischengeschaltet ist, die es ermöglicht, dass Strom nur in einer Richtung durchfließt, wobei das erste unidirektionale Stromflusssteuerelement (64) den ersten und den zweiten Schenkel (48, 52) zusammenschaltet, um selektiv eine erste Reihenschaltung zwischen der ersten und der zweiten Energiespeichervorrichtungen (26, 44) zu erstellen und Strom durch das Verbindungsmodul (16) in der ersten Richtung (D1) fließen zu lassen, wenn jedes von dem ersten Paar (58) von bidirektionalen Stromflusssteuerelementen (60, 62) den Stromfluss in der ersten Richtung (D₁) blockiert,
wobei das Verbindungsmodul (16) im ersten Verbindungsmodus das konfigurierbare Leistungsmodul (10; 80; 90; 140) in einer Vollbrückenanordnung anordnet, in der eine Parallelschaltung zwischen der ersten und der zweiten Energiespeichervorrichtung (26, 44) hergestellt wird, die bidirektionale Stromflusseigenschaften aufweist, und das Verbindungsmodul (16) im zweiten Verbindungsmodus die erste und die zweite Energiespeichervorrichtung (26, 44) zusammenschaltet, um zuzulassen, dass die erste und zweite Energiespeichervorrichtung (26, 44) eine Sperrspannung kombinieren und erzeugen, um dem Stromfluss zwischen dem ersten und dem zweiten Verbindungsanschluss (24, 42) entgegenzuwirken.

2. Konfigurierbares Leistungsmodul (10; 80; 90; 140) nach Anspruch 1, wobei das Verbindungsmodul (16) im ersten Verbindungsmodus eine Parallelverbindung zwischen der ersten und der zweiten Energiespeichervorrichtung (26, 44) erstellt, die zulässt, dass Strom in die erste und zweite Energiespeichervorrichtung (26, 44) in der ersten und der zweiten entgegengesetzten Richtung (D₁, D₂) dort hinein und hinaus fließt.

3. Konfigurierbares Leistungsmodul (10; 80; 90; 140) nach Anspruch 1 oder Anspruch 2,
wobei jedes der Schaltelemente (20, 22; 38, 40) in jedem der ersten und zweiten Untermodule (12, 14) ein bidirektionales Stromflusssteuerelement (28) ist, das selektiv den Stromfluss dadurch in eine Richtung blockiert, während immer Strom in eine entgegengesetzte Richtung dadurch fließen kann.

4. Konfigurierbares Leistungsmodul (10; 80; 90; 140) nach Anspruch 1 oder Anspruch 2,
wobei eines der Schaltelemente (20, 22; 38, 40) in jedem der ersten und zweiten Untermodule (12, 14) ein bidirektionales Stromflusssteuerelement (28) ist, das selektiv den Stromfluss dadurch in einer Richtung blockiert und gleichzeitig immer zulässt, dass Strom in einer entgegengesetzten Richtung dadurch fließen kann, und wobei das andere der Schaltelemente (20, 22; 38, 40) in jedem der ersten und zweiten Untermodule (12, 14) ein unidirektionales Stromflusssteuerelement ist, das einen Stromfluss nur in einer Richtung dadurch zulässt.

5. Konfigurierbares Leistungsmodul (80; 90) nach einem der vorstehenden Ansprüche, wobei das Verbindungsmodul (16) eine Vielzahl von ersten Verbindungsmodulabschnitten (56) einschließt und benachbarte Paare der ersten Verbindungsmodulabschnitte (56) durch eine weitere Energiespeichervorrichtung (82) getrennt sind, die parallel zwischen dem ersten und dem zweiten Schenkel (48, 52) geschaltet ist.

6. Konfigurierbares Leistungsmodul (90) nach einem der vorstehenden Ansprüche, wobei das Verbindungsmodul (16) zusätzlich einen zweiten Verbindungsmodulabschnitt (92) einschließt, einschließlich eines zweiten Paares (94) von bidirektionalen Stromflusssteuerelementen (96, 98), von denen eines innerhalb des ersten Schenkels (48) liegt und das andere innerhalb des zweiten Schenkels (52) liegt, wobei jedes der zweiten Paare (94) von bidirektionalen Stromflusssteuerelementen (96, 98) den Stromfluss durch den entsprechenden Schenkel (48, 52) in der gleichen zweiten Richtung (D₂) entgegengesetzt der ersten Richtung (D₁) selektiv blockiert, in der jedes der ersten Paare (58) von bidirektionalen Stromflusssteuerelementen (60, 62) des ersten Verbindungsmodulabschnitts (56) den Stromfluss selektiv blockiert, wobei der zweite Modulabschnitt (92) weiter ein zweites unidirektionales Stromflusssteuerelement (100) einschließt, das den ersten und den zweiten Schenkel (48, 52) zusammenschaltet, um eine zweite Reihenschaltung zwischen der ersten und der zweiten Energiespeichervorrichtung (26, 44) herzustellen und zulässt, dass Strom durch das Verbindungsmodul (16) in der zweiten Richtung (D₂) fließt, wenn jedes der zweiten Paare von bidirektionalen Stromflusssteuerelementen (96, 98) den Stromfluss in der zweiten Richtung (D₂) blockiert, wobei der zweite Verbindungsmodulabschnitt (92) neben dem ersten Verbindungsabschnitt (56) liegt, um einen bidirektionalen Modulabschnitt (104) zu definieren.

7. Konfigurierbares Leistungsmodul nach Anspruch 6, wobei das Verbindungsmodul (16) eine Vielzahl von nebeneinander liegenden ersten und zweiten Verbindungsmodulabschnitten (56, 92) einschließt, um entsprechende bidirektionale Modulabschnitte (104) zu definieren, wobei benachbarte Paare von bidirektionalen Modulabschnitten (104), die durch eine weitere Energiespeichervorrichtung getrennt sind, parallel zwischen dem ersten und dem zweiten Schenkel (48, 52) geschaltet sind.

8. Konfigurierbares Leistungsmodul (10; 80; 90; 140) nach einem der vorstehenden Ansprüche, weiter einschließend eine Steuereinheit (68), die in Betriebskommunikation mit jedem der ersten und zweiten Untermodule (12, 14) und dem Verbindungsmodul (16) angeordnet ist, wobei die Steuereinheit (68) im Gebrauch das konfigurierbare Leistungsmodul (10; 80; 90; 140) konfiguriert, um in einem Normalmodus und in einem Sperrmodus zu arbeiten,
wobei die Steuereinheit (68) bei der Konfiguration des konfigurierbaren Leistungsmoduls (10; 80; 90; 140) im Normalmodus arbeitet, der das Verbindungsmodul (16) im ersten Verbindungsmodus betreibt, in dem die parallel geschalteten Energiespeichervorrichtungen (26, 44) miteinander kombinieren, um einen größeren kombinierten Energiespeicher zu bilden, und die Steuereinheit (68) die jeweiligen Schaltelemente (20, 22; 38, 40) weiter in dem ersten und zweiten Untermodul (12, 14) ein- und ausschaltet, um selektiv Strom durch den kombinierten Energiespeicher in der ersten und zweiten entgegengesetzten Richtung (Dc₁, Dc₂) zu leiten, so dass das konfigurierbare Leistungsmodul (10; 80; 90; 140) sowohl eine positive Spannungsquelle als auch eine negative Spannungsquelle bereitstellen kann, deren Größe der größeren Größe des kombinierten Energiespeichers entspricht, und
die Steuereinheit (68) beim Konfigurieren des konfigurierbaren Leistungsmoduls (10; 80; 90; 140) im Sperrmodus arbeitet, um das jeweilige Schaltelement (20, 22; 38, 40) im ersten und zweiten Untermodul (12, 14) auszuschalten und das Verbindungsmodul (16) im zweiten Verbindungsmodus zu betreiben.

9. Konfigurierbares Leistungsmodul (10; 80; 90; 140) nach Anspruch 8, wobei die Steuereinheit (68) beim Betrieb des Verbindungsmoduls (16) im zweiten Verbindungsmodus bewirkt, dass das Verbindungsmodul (16) die erste und die zweite Energiespeichervorrichtung (26, 44) in Reihe miteinander schaltet.

10. Spannungsquellenwandler (110), umfassend mindestens einen Wandlerschenkel (116, 118, 120), der erste und zweite Schenkelabschnitte (122, 124) einschließt, von denen jeder eine Vielzahl in Reihe geschalteter konfigurierbarer Leistungsmodule (10; 80; 90; 140) nach Anspruch 8 oder Anspruch 9 einschließt.

11. Spannungsquellenwandler nach Anspruch 10, wobei die Steuereinheit (68) konfiguriert ist, um jedes der konfigurierbaren Leistungsmodule (10; 80; 90; 140) in einem Schenkelabschnitt (122, 124) selektiv zu konfigurieren, um im Normalmodus zu arbeiten, während jedes der konfigurierbaren Leistungsmodule (10; 80; 90; 140) im anderen Schenkelabschnitt (122, 124) konfiguriert ist, um im Sperrmodus zu arbeiten.

12. Verfahren zum Konfigurieren eines konfigurierbaren Leistungsmoduls (10; 80; 90; 140) nach einem der Ansprüche 1 bis 9, wobei:
das Konfigurieren des konfigurierbaren Leistungsmoduls (10; 80; 90; 140) für den Betrieb im Normalmodus die folgenden Schritte umfasst:
(a) Betreiben des Verbindungsmoduls (16) im ersten Verbindungsmodus, wobei das konfigurierbare Leistungsmodul (10; 80; 90; 140) als Vollbrücke angeordnet ist, in der die parallel geschalteten Energiespeichervorrichtungen (26, 44) miteinander kombinieren, um einen größeren kombinierten Energiespeicher zu bilden; und
(b) Ein- und Ausschalten der jeweiligen Schaltelemente (20, 22; 38, 40) in dem ersten und zweiten Untermodul (12, 14), um selektiv Strom durch den kombinierten Energiespeicher in der ersten und zweiten entgegengesetzten Richtung (Dc₁, Dc₂) zu leiten, so dass das konfigurierbare Leistungsmodul (10; 80; 90; 140) sowohl eine positive Spannungsquelle als auch eine negative Spannungsquelle bereitstellen kann, deren Größe der größeren Größe des kombinierten Energiespeichers entspricht; und
das Konfigurieren des konfigurierbaren Leistungsmoduls (10; 80; 90; 140) für den Betrieb im Sperrmodus die folgenden Schritte umfasst:
(c) Ausschalten der jeweiligen Schaltelemente (20, 22; 38, 40) im ersten und zweiten Untermodul (12, 14); und
(d) Betreiben des Verbindungsmoduls (16) im zweiten Verbindungsmodus.

13. Verfahren zum Konfigurieren eines konfigurierbaren Leistungsmoduls (10; 80; 90; 140) nach Anspruch 12, wobei das Betreiben des Verbindungsmoduls (16) im zweiten Verbindungsmodus das Bewirken einschließt, dass das Verbindungsmodul (16) die erste und die zweite Energiespeichervorrichtung (26; 44) in Reihe zusammenschaltet.

14. Verfahren zum Betreiben eines Spannungsquellenwandlers (110) nach Anspruch 10 oder Anspruch 11, umfassend den Schritt des selektiven Konfigurierens jedes der konfigurierbaren Leistungsmodule (10; 80; 90; 140) in einem Schenkelabschnitt (122, 124), um im Normalmodus zu arbeiten, während jedes der konfigurierbaren Leistungsmodule (10; 80; 90; 140) im anderen Schenkelabschnitt (122, 124) konfiguriert ist, um im Sperrmodus zu arbeiten.

## Revendications

1. Module de puissance configurable (10 ; 80 ; 90 ; 140), pour son utilisation dans un réseau de transmission de puissance, comprenant :
un premier sous-module (12) comportant une première paire d'éléments de commutation connectés en série (20, 22) séparés par une première borne de connexion (24) et connectés en parallèle avec un premier dispositif de stockage d'énergie (26) ; et
un second sous-module (14) comportant une seconde paire (36) d'éléments de commutation connectés en série (38, 40) séparés par une seconde borne de connexion (42) et connectés en parallèle avec un second dispositif de stockage d'énergie (44),
un module de connexion (16) fonctionnel pour interconnecter les premier et second sous-modules (12, 14) dans des premier et second modes de connexion,
dans lequel le module de connexion (16) comporte
un premier membre (48) qui s'étend entre un premier côté (50) de chacun des premier et second dispositifs de stockage d'énergie (26, 44) ;
un second membre (52) qui s'étend entre un second côté (54) de chacun des premier et second dispositifs de stockage d'énergie (26, 44) ; et
une première portion de module de connexion (56) qui comporte une première paire (58) d'éléments de commande de circulation de courant bidirectionnelle (60, 62), un élément de commande de circulation de courant bidirectionnelle (60) se trouvant au sein du premier membre (48) et l'autre élément de commande de circulation de courant bidirectionnelle (62) se trouvant au sein du second membre (52), chacun des éléments de commande de circulation de courant bidirectionnelle (60, 62) bloquant sélectivement une circulation de courant à travers le membre (48, 52) correspondant dans la même première direction (D₁) et permettant au courant de circuler à travers le membre (48, 52) correspondant dans la même seconde direction (D₂) opposée à la première direction (D₁),
dans lequel la première portion de module de connexion (56) comporte en outre un premier élément de commande de circulation de courant unidirectionnelle (64) interconnecté entre le premier côté (50) du premier dispositif de stockage d'énergie (26) et le second côté (54) du second dispositif de stockage d'énergie (44), qui permet à un courant de circuler au travers uniquement dans une direction, le premier élément de commande de circulation de courant unidirectionnelle (64) interconnectant les premier et second membres (48, 52) pour établir sélectivement une première connexion en série entre les premier et second dispositifs de stockage d'énergie (26, 44) et permettre à un courant de circuler à travers le module de connexion (16) dans la première direction (D₁) lorsque chacun de la première paire (58) d'éléments de commande de circulation de courant bidirectionnelle (60, 62) bloque une circulation de courant dans la première direction (D₁),
le module de connexion (16) dans le premier mode de connexion agençant le module de puissance configurable (10; 80; 90; 140) en un agencement en pont complet dans lequel une connexion en parallèle entre les premier et second dispositifs de stockage d'énergie (26, 44) est établie qui présente des caractéristiques de circulation de courant bidirectionnelle, et le module de connexion (16) dans le second mode de connexion interconnectant les premier et second dispositifs de stockage d'énergie (26, 44) pour permettre aux premier et second dispositifs de stockage d'énergie (26, 44) de se combiner et de générer une tension de blocage pour s'opposer à la circulation de courant entre les première et seconde bornes de connexion (24, 42).

2. Module de puissance configurable (10; 80; 90; 140) selon la revendication 1, dans lequel le module de connexion (16) dans le premier mode de connexion établit une connexion en parallèle entre les premier et second dispositifs de stockage d'énergie (26, 44) qui permet à un courant de circuler dans et hors de chacun des premier et second dispositifs de stockage d'énergie (26, 44) dans les première et seconde directions opposées (D₁, D₂).

3. Module de puissance configurable (10 ; 80 ; 90; 140) selon la revendication 1 ou la revendication 2, dans lequel chacun des éléments de commutation (20, 22 ; 38, 40) dans chacun des premier et second sous-modules (12, 14) est un élément de commande de circulation de courant bidirectionnelle (28) qui bloque sélectivement une circulation de courant au travers dans une direction tout en permettant toujours à un courant de circuler dans une direction opposée au travers.

4. Module de puissance configurable (10 ; 80 ; 90 ; 140) selon la revendication 1 ou la revendication 2, dans lequel l'un des éléments de commutation (20, 22 ; 38, 40) dans chacun des premier et second sous-modules (12, 14) est un élément de commande de circulation de courant bidirectionnelle (28) qui bloque sélectivement une circulation de courant au travers dans une direction tout en permettant toujours à un courant de circuler dans une direction opposée au travers, et l'autre des éléments de commutation (20, 22 ; 38, 40) dans chacun des premier et second sous-modules (12, 14) est un élément de commande de circulation de courant unidirectionnelle qui permet une circulation de courant au travers uniquement dans une direction.

5. Module de puissance configurable (80 ; 90) selon l'une quelconque des revendications précédentes, dans lequel le module de connexion (16) comporte une pluralité de premières portions de module de connexion (56), et des paires adjacentes des premières portions de module de connexion (56) sont séparées par un dispositif de stockage d'énergie supplémentaire (82) connecté en parallèle entre les premier et second membres (48, 52).

6. Module de puissance configurable (90) selon l'une quelconque des revendications précédentes, dans lequel le module de connexion (16) comporte en outre une seconde portion de module de connexion (92) comportant une seconde paire (94) d'éléments de commande de circulation de courant bidirectionnelle (96, 98) dont l'un se trouve au sein du premier membre (48) et l'autre se trouve au sein du second membre (52), chacun de la seconde paire (94) d'éléments de commande de circulation de courant bidirectionnelle (96, 98) bloquant sélectivement une circulation de courant à travers le membre (48, 52) correspondant dans la même seconde direction (D₂) opposée à la première direction (D₁) dans laquelle chacun de la première paire (58) d'éléments de commande de circulation de courant bidirectionnelle (60, 62) de la première portion de module de connexion (56) bloque sélectivement une circulation de courant, la seconde portion de module (92) comportant en outre un second élément de commande de circulation de courant unidirectionnelle (100) qui interconnecte les premier et second membres (48, 52) pour établir une seconde connexion en série entre les premier et second dispositifs de stockage d'énergie (26, 44) et permet à un courant de circuler à travers le module de connexion (16) dans la seconde direction (D₂) lorsque chacun de la seconde paire d'éléments de commande de circulation de courant bidirectionnelle (96, 98) bloque une circulation de courant dans la seconde direction (D₂), la seconde portion de module de connexion (92) se trouvant à côté de la première portion de connexion (56) pour définir une portion de module bidirectionnelle (104).

7. Module de puissance configurable selon la revendication 6, dans lequel le module de connexion (16) comporte une pluralité de première et seconde portions de module de connexion (56, 92) se trouvant les unes à côté des autres pour définir des portions de module bidirectionnelles (104) respectives, des paires adjacentes de portions de module bidirectionnelles (104) étant séparées par un dispositif de stockage d'énergie supplémentaire connecté en parallèle entre les premier et second membres (48, 52).

8. Module de puissance configurable (10 ; 80 ; 90 ; 140) selon l'une quelconque des revendications précédentes, comportant en outre une unité de commande (68) agencée en communication fonctionnelle avec chacun des premier et second sous-modules (12, 14) et le module de connexion (16), l'unité de commande (68) en utilisation configurant le module de puissance configurable (10; 80 ; 90 ; 140) pour fonctionner dans un mode normal et dans un mode de blocage,
l'unité de commande (68) lorsqu'elle configure le module de puissance configurable (10; 80 ; 90 ; 140) pour fonctionner dans le mode normal faisant fonctionner le module de connexion (16) dans le premier mode de connexion dans lequel les dispositifs de stockage d'énergie connectés en parallèle (26, 44) se combinent les uns aux autres pour former un magasin d'énergie combiné plus grand, et l'unité de commande (68) activant et désactivant en outre des éléments de commutation (20, 22 ; 38, 40) respectifs dans les premier et second sous-modules (12, 14) pour diriger sélectivement un courant à travers le magasin d'énergie combiné dans des première et seconde directions opposées (D_{C1}, D_{C2}) de sorte que le module de puissance configurable (10 ; 80 ; 90; 140) soit capable de fournir à la fois une source de tension positive et une source de tension négative d'une taille proportionnée à la taille plus grande du magasin d'énergie combiné, et
l'unité de commande (68) lorsqu'elle configure le module de puissance configurable (10 ; 80 ; 90; 140) pour fonctionner dans le mode de blocage désactivant des éléments de commutation (20, 22 ; 38, 40) respectifs dans les premier et second sous-modules (12, 14) et faisant fonctionner le module de connexion (16) dans le second mode de connexion.

9. Module de puissance configurable (10 ; 80; 90; 140) selon la revendication 8, dans lequel l'unité de commande (68) lorsqu'elle fait fonctionner le module de connexion (16) dans le second mode de connexion amène le module de connexion (16) à interconnecter les premier et second dispositifs de stockage d'énergie (26, 44) en série l'un avec l'autre.

10. Convertisseur de source de tension (110) comprenant au moins un membre de convertisseur (116, 118, 120) qui comporte des première et seconde portions de membre (122, 124) dont chacune comporte une pluralité de modules de puissance configurables (10; 80 ; 90; 140) connectés en série selon la revendication 8 ou la revendication 9.

11. Convertisseur de source de tension selon la revendication 10, dans lequel l'unité de commande (68) est configurée pour configurer sélectivement chacun des modules de puissance configurables (10 ; 80 ; 90 ; 140) dans une portion de membre (122, 124) pour fonctionner dans le mode normal tout en configurant chacun des modules de puissance configurables (10 ; 80 ; 90 ; 140) dans l'autre portion de membre (122, 124) pour fonctionner dans le mode de blocage.

12. Procédé de configuration d'un module de puissance configurable (10 ; 80 ; 90 ; 140) selon l'une quelconque des revendications 1 à 9, dans lequel :
la configuration du module de puissance configurable (10 ; 80 ; 90 ; 140) pour fonctionner dans un mode normal comprend les étapes de :
(a) fonctionnement du module de connexion (16) dans le premier mode de connexion moyennant quoi le module de puissance configurable (10 ; 80; 90; 140) est agencé sous forme de pont complet dans lequel les dispositifs de stockage d'énergie connectés en parallèle (26, 44) se combinent l'un avec l'autre pour former un magasin d'énergie combiné plus grand ; et
(b) activation et désactivation d'éléments de commutation (20, 22 ; 38, 40) respectifs dans les premier et second sous-modules (12, 14) pour diriger sélectivement un courant à travers le magasin d'énergie combiné dans les première et seconde directions opposées (D_{C1}, D_{C2}) de sorte que le module de puissance configurable (10 ; 80 ; 90 ; 140) soit capable de fournir à la fois une source de tension positive et une source de tension négative d'une taille proportionnée à la taille plus grande du magasin d'énergie combiné ; et
la configuration du module de puissance configurable (10 ; 80 ; 90 ; 140) pour fonctionner dans un mode de blocage comprend les étapes de :
(c) désactivation d'éléments de commutation (20, 22 ; 38, 40) respectifs dans les premier et second sous-modules (12, 14) ; et
(d) fonctionnement du module de connexion (16) dans le second mode de connexion.

13. Procédé de configuration d'un module de puissance configurable (10 ; 80 ; 90 ; 140) selon la revendication 12, dans lequel le fonctionnement du module de connexion (16) dans le second mode de connexion comporte le fait d'amener le module de connexion (16) à interconnecter les premier et second dispositifs de stockage d'énergie (26, 44) en série l'un avec l'autre.

14. Procédé de fonctionnement d'un convertisseur de source de tension (110) selon la revendication 10 ou la revendication 11, comprenant l'étape de configuration sélective de chacun des modules de puissance configurables (10 ; 80 ; 90 ; 140) dans une portion de membre (122, 124) pour fonctionner dans le mode normal tout en configurant chacun des modules de puissance configurables (10 ; 80 ; 90 ; 140) dans l'autre portion de membre (122, 124) pour fonctionner dans le mode de blocage.
